# EUROPEAN PATENT SPECIFICATION

(11) **EP 1 379 833 B1**
(45) Date of publication and mention of the grant of the patent: **01.06.2016**
(21) Application number: 02714258.7
(22) Date of filing: 15.04.2002
(51) Int. Cl.: G01B 11/00

(54) **METHOD FOR INDICATING A POINT IN A MEASUREMENT SPACE**
VERFAHREN ZUM ANGEBEN EINES PUNKTS IN EINEM MESSRAUM
METHODE PERMETTANT D'INDIQUER UN POINT DANS UN ESPACE DE MESURE

(30) Priority: 19.04.2001 FI 20010808
(43) Date of publication of application: 14.01.2004
(73) Proprietor: Mapvision OY, 02130 Espoo (FI)
(72) Inventor: LEIKAS, Esa, FIN-02130 Espoo (FI)
(74) Representative: Papula Oy
(86) International application number: PCT/FI2002/000318
(87) International publication number: WO 2002/086418

(56) References cited:
- EP-A2- 0 306 731
- WO-A1-89/09922
- DE-A1- 19 534 415
- DE-A1- 19 822 392
- US-A- 4 721 388
- US-A- 5 267 143
- US-A- 5 394 183
- US-B1- 6 256 099

## Description

### FIELD OF THE INVENTION

The present invention relates to measuring technique. In particular, the invention relates to a method that can be used to measure a known point in a known object, or e.g. to check whether a reflecting surface exists at a given point in space and to determine the exact position of said surface.

### BACKGROUND OF THE INVENTION

In prior art, various methods for the measurement of a point on the surface of an object are known. Finnish patent no. 87951 discloses a method for specifying a point in three-dimensional space by means of two laser pointers. Traditionally, when a point on the surface of an object is to be measured, the object is accurately fixed to a jig and the measurement points are specified either by the method of the aforesaid patent specification or e.g. manually.

Finnish patent no. 74556 discloses a method for three-dimensional monitoring of a planar space. In this method, the space is observed by means of at least two image recording devices fitted at a distance from each other and at a fixed angle relative to each other, the pictures of the space received by these image recording devices are digitized and the target points are located in the image planes of the recording devices and, using the image coordinates of these target points and certain predetermined constants, the coordinates of the target points in the three-dimensional space under observation are calculated.

US 5267143 discloses a method and apparatus for fabrication or alignment of fixtures, jigs and structures is disclosed. The invention uses target points on one or more details which, are referenced to the overall structure via targets on the details. These targets are monitored by a TV camera unit which is alternatively interfaced to a display for the human operator or a robot to provide position data. The interface may include input from a CAD system which allows display on robot coordinates to be offset by design data of the structure or a part to be located on it. Further known solutions have been discussed in WO 89/03922, US5394183, US4721388 and DE19534415.

### OBJECT OF THE INVENTION

The object of the invention is to disclose a new type of method whereby a point in a measurement cific object of the invention is to disclose a new type of method for specifying a point in an object located in a measurement space.

### BRIEF DESCRIPTION OF THE INVENTION

In the invention, a point is specified in a measurement space, said measurement space containing a point which is pointed at by a pointer, which pointer emits a pulse, and a reflection of this pulse is measured by a measuring system, and thus the position of the point having caused the reflection in the measurement space can be determined.

In an embodiment of the invention, a measuring system according to patent specification 74556 is calibrated as instructed by said specification to a three-dimensional measurement space and a laser pointer according to patent specification 87951 is calibrated to this same space so that a relation, a mathematical model is formed between this laser pointer and the measuring system, which relation or model can be used to calculate the pointer position required when the pointer is to point through a given point in the measurement space. This mathematical model, as well as the commands needed to control the pointer and the equations needed in the processing of the data obtained from the measuring system, are preferably programmed on a computer. The measuring system preferably measures the position of the object in space, and a computing unit, using the relation between the object's position, the pointer and the measurement space, the coordinates of the point in the model of the object, calculates the coordinates to be sent to the pointer. This calculation consists of simple coordinate conversion, and it will not be dealt with in detail in the present application. A prerequisite in this preferred embodiment is that a model of the object be somehow previously known. The model may consist of e.g. a CAD model or a model in a form that the computing unit is able to process.

According to a preferred embodiment of the invention, the distance between the point pointed at and the pointer is measured e.g. on the fathometer principle, whereby the reflection time of the signal sent by the pointer is measured and the distance of the reflecting point from the pointer is calculated from the reflection time and the signal velocity, which is e.g. a known natural constant, c. As the position of the pointer relative to the measuring system is known, this distance can be used for checking or adjusting the coordinates of the measured point.

By the method of the invention, it is easy to quickly establish whether a reflecting surface exists at a given location in a measurement space. On the other hand, it is possible to measure, without a jig or equivalent, one or more points in an object and thus to establish their absolute position or e.g. the precision of a component. In addition, as the method allows the use of e.g. a CAD model or an equivalent computer-readable model, the object to be measured can be replaced quickly and, for instance, each object to be measured may be different. The method can be applied as an element of quality control in production where cycle times are short but where several points in different locations in the objects being manufactured can be measured within the cycle time. Also, e.g. when several points at equal distances on the surface of a complex object are to be measured, this can be easily achieved by determining these points in a model of the object and converting the coordinates into a pointer space to suit the pointer.

### DETAILED DESCRIPTION OF THE INVENTION

In the following, the invention will be described in detail by the aid of examples of its embodiments with reference to the attached drawing, which is a diagrammatic representation of a method according to the invention.

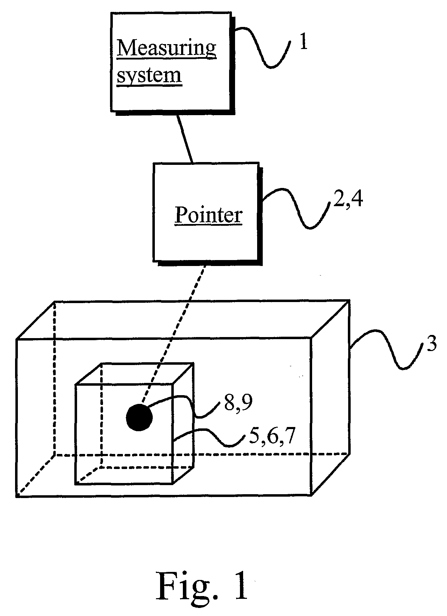

Fig. 1 presents a measuring system 1 consisting of two cameras and a computing unit connected to them. The computing unit contains the means required for the processing of the information provided by the cameras. Typically, the cameras are digital cameras, and there may be two or more of them. The computing unit contains the required data for the processing of the information obtained from the cameras and for creating a three-dimensional model based on this information. A measuring system according to an embodiment of the present invention corresponds to the arrangement described in Finnish published patent application 74556, yet the invention is not limited to the embodiment presented here, but all measuring systems suited for three-dimensional monitoring of a measurement space are applicable.

The cameras can record e.g. visible light, infrared light or some other electromagnetic radiation, or sound or any undulating motion. However, the undulating motion measured by the measuring system is such that, when the pointer is pointing at a given point, either this undulating motion is reflected back from the point being pointed at or the pointing causes this point to radiate such undulating motion, e.g. by fluorescence.

The calibration of a measuring system to a measurement space is known in prior art and it will not be dealt with in detail in this application. Provided in conjunction with this same computing unit 4 is a pointer 2. This pointer comprises at least a radiation source, preferably a laser, and means for adjusting the directional angle of the radiation beam, allowing the radiation beam to be aligned in the target space. The pointer may also be an infrared, ultraviolet or ultrasound pointer, or any pointer. The pointer is also connected to the computing unit. The position of the pointer can be adjusted. According to the invention, the pointer is calibrated to the measuring system. The calibration is carried out by directing the pointer to several points in the measurement space, the exact positions of which points are either known or they are measured by the measuring system. The angle and attitude of the pointer are also measured as it is pointing at the aforesaid points. When both the pointer attitude and the positions of these points in the measurement space according to the measuring system are known and there are at least three of such points, it is possible to form a mathematical equation for converting a point of the three-dimensional measurement space into a point of the two-dimensional pointer space. It is to be noted that the pointer space is preferably a pointer-centered spherical polar coordinate system where the only variables are α and β, i.e. two angles, while the pointer beam is a ray, and this ray can be omitted from the coordinate conversion.

In a preferred embodiment, a rectangular coordinate system is used, in other words, the coordinates (x,y) obtained from the laser pointer are like image coordinates obtained from a camera. In this case, instead of an angle, a value is obtained that corresponds to the intersection (x,y) between the ray and an imaginary plane placed in front of the pointer. This makes it easier to control the situation when the rays produced by the laser pointer at different angles do not intersect at the same point. This is almost always the case in mirror scanners. As the relation between the measurement space and the pointer space is known, it is stored on the computing unit and the coordinate conversions can be made automatically.

According to a preferred embodiment of the invention, the method is used for measuring a point in given part of space. In this embodiment, the pointer is so directed that it penetrates this part of space and a measurement is made by the measuring system to establish whether the ray emitted by the pointer has been reflected from this part, and the position of the reflected ray is measured. This embodiment can be used e.g. for the verification of installation. According to a second embodiment of the invention, the measurement space is part of a quality control system where the object to be monitored is at least partially within the measurement space, where its exact position is determined by the measuring system, whereupon the pointer can be pointed at a desired point or desired points in the object, the exact positions of which can be measured. A prerequisite for this is that a model of the object be known in some way so that, after the position of the object has been determined, a coordinate conversion can be performed by the measuring system when the coordinates of the points to be measured in the model of the object are known.

The coordinate conversion is made from the coordinates of the model of the object to the measurement space and further to the pointer space. The model of the object may be any kind of model, preferably a model that can be stored on a computer, in which case the model can be quickly replaced and the object under measurement can also be quickly replaced with a different object.

This embodiment can also be combined with pattern recognition, where an object is recognized and a model is selected on the basis of the recognition, whereupon desired points in this object are measured on the basis of the model selected by pattern recognition. According to a preferred embodiment of the invention, a number of pointers are used and they are all calibrated to the measurement space of the measuring system. With these pointers, different points in an object can be pointed at simultaneously when the measuring system is to produce an image of e.g. the entire object. It is to be noted that, since the tolerances in the objects to be measured are generally not very large and therefore the coordinates of the place pointed at by the pointer can be expected to be found very close to the coordinates determined by the original model, the calculation of the positions of the measured points can be only performed using that part of the data that the measuring system provides from the vicinity of these places. Thus, the points pointed at by different pointers can be easily distinguished from each other when the data provided by the measuring system is being processed by a computer, and no large or superfluous amounts of data are processed, which means faster processing and therefore faster measurement.

According to a preferred embodiment of the invention, the time of passage of the pulse emitted by the pointer to the point pointed at and further to a known place in the measurement space, e.g. back to the pointer, is measured and, based on this time and the velocity of advance of the pulse, e.g. a natural constant, the exact distance of the point from the known part of the measurement space is determined. This distance can be utilized for checking or adjusting the position of the point calculated on the basis of the data provided by the measuring system.

The invention is not restricted to the examples of its embodiments described above; instead, many variations are possible within the scope of the inventive idea defined in the claims.

## Claims

1. Method for specifying a desired point (8) to be pointed at in a measurement space (3), the point being on an object, and for measuring the real position of the point (9) thus pointed at, the method comprises the steps of:
calibrating a measuring system (1) to a three-dimensional measurement space (3),
calibrating a pointer (2) to the same measurement space (3),
pointing the pointer (2) at said desired point (8) of said object, using the nominal coordinates of said desired point (8)
wherein said nominal coordinates are taken from a model (6) of said object, and using a coordinate conversion of the coordinates of said model in said measurement space, and
measuring the real position of the point (9) thus pointed at, using the measuring system (1).

2. Method according to claim 1, **characterized in that**, to calibrate the pointer (2), the pointer (2) is pointed at a spot in the measurement space (3), and the position of said spot is measured by the measuring system (1).

3. Method according to claim 1 or 2, **characterized in that**, in the calibration of the pointer (2), the position of the pointer (2) relative to the measuring system is determined.

4. Method according to claim 3, **characterized in that**, using the position data of the pointer (2), an equation for converting the coordinate system of the measurement space (3) into a pointer-centered spherical polar coordinate system is formed.

5. Method according to claim 3, **characterized in that**, using the position data of the pointer (2), an equation for converting the coordinate system of the measurement space (3) into a rectangular coordinate system is formed.

6. Method according to any one of the preceding claims, **characterized in that** the point (8) is comprised in an object (5), a model (6) of which and the location (7) of which in the measurement space (1) are at least partially known.

7. Method according to claim 6, **characterized in that** the position (7) of the object (5) is measured by the measuring system (1).

8. Method according to claim 7, **characterized in that** the coordinates of the point (8) in the measurement space (1) are calculated on the basis of the position (7) of the object (5) in the measurement space (1) and the position of a point corresponding to said point (8) in the model (6) of the object (5).

9. Method according to any one of claims 5-7, **characterized in that** the model (6) of the object (5) is a CAD model.

10. Method according to any one of the preceding claims, **characterized in that** two or more pointers (2) are used.

11. Method according to any one of the preceding claims, **characterized in that** the calculations are performed using a computer that is capable of transmitting data to the pointer (2) and receiving data from the measuring system (1).

12. Method according to any one of the preceding claims, **characterized in that** the pointer (2) is one that uses white light.

13. Method according to any one of the preceding claims, **characterized in that** the distance of the point pointed at from the pointer is measured on the fathometer principle, and this information is used for adjusting the position data of the point pointed at.

14. Method according to any one of the preceding claims, **characterized in that** the measuring system (1) is an optical camera system.

15. Method according to any one of the preceding claims, **characterized in that** the pointer (2) points at several points in the target simultaneously.

## Patentansprüche

1. Verfahren zum Spezifizieren eines gewünschten Punkts (8), auf den in einem Messraum (3) gezeigt werden soll, wobei sich der Punkt auf einem Objekt befindet, und zum Messen der wirklichen Position des Punkts (9), auf den auf diese Weise gezeigt wird, wobei das Verfahren die folgenden Schritte umfasst:
Kalibrieren eines Messsystems (1) auf einen dreidimensionalen Messraum (3),
Kalibrieren eines Zeigers (2) auf denselben Messraum (3),
Richten des Zeigers (2) auf den gewünschte Punkt (8) des Objekts unter Verwendung der Nominalkoordinaten des gewünschten Punkts (8), wobei die Nominalkoordinaten dem Modell des Objekts entnommen werden, und unter Verwendung einer Koordinatenmwandlung der Koordinaten des Modells in dem Messraum, und
Messen der wirklichen Position des Punkts (9), auf den gezeigt wird, unter Verwendung des Messsystems (1).

2. Verfahren nach Anspruch 1, **dadurch gekennzeichnet, dass** zum Kalibrieren des Zeigers (2) der Zeiger (2) auf eine Stelle in dem Messraum (3) gerichtet wird und die Position der Stelle durch das Messsystem (1) gemessen wird.

3. Verfahren nach Anspruch 1 oder 2, **dadurch gekennzeichnet, dass** beim Kalibrieren des Zeigers (2) die Position des Zeigers (2) relativ zu dem Messsystem bestimmt wird.

4. Verfahren nach Anspruch 3, **dadurch gekennzeichnet, dass** unter Verwendung der Positionsdaten des Zeigers (2) eine Gleichung zum Umwandeln des Koordinatensystems des Messraums (3) in ein auf den Zeiger zentriertes System sphärischer Polarkoordinaten aufgestellt wird.

5. Verfahren nach Anspruch 3, **dadurch gekennzeichnet, dass** unter Verwendung der Positionsdaten des Zeigers (2) eine Gleichung zum Umwandeln des Koordinatensystems des Messraums (3) in ein rechtwinkliges Koordinatensystem aufgestellt wird.

6. Verfahren nach einem der vorhergehenden Ansprüche, **dadurch gekennzeichnet, dass** der Punkt (8) in einem Objekt (5) enthalten ist, wovon ein Modell (6) und der Ort (7) in dem Messraum (1) zumindest teilweise bekannt sind.

7. Verfahren nach Anspruch 6, **dadurch gekennzeichnet, dass** die Position (7) des Objekts (5) durch das Messsystem (1) gemessen wird.

8. Verfahren nach Anspruch 7, **dadurch gekennzeichnet, dass** die Koordinaten des Punkts (8) in dem Messraum (1) anhand der Position (7) des Objekts (5) in dem Messraum (1) und der Position eines Punkts, der dem Punkt (8) in dem Modell (6) des Objekts (5) entspricht, berechnet werden.

9. Verfahren nach einem der Ansprüche 5-7, **dadurch gekennzeichnet, dass** das Modell (6) des Objekts (5) ein CAD-Modell ist.

10. Verfahren nach einem der vorhergehenden Ansprüche, **dadurch gekennzeichnet, dass** zwei oder mehr Zeiger (2) verwendet werden.

11. Verfahren nach einem der vorhergehenden Ansprüche, **dadurch gekennzeichnet, dass** die Berechnungen unter Verwendung eines Computers ausgeführt werden, der Daten zu dem Zeiger (2) senden und Daten von dem Messsystem (1) empfangen kann.

12. Verfahren nach einem der vorhergehenden Ansprüche, **dadurch gekennzeichnet, dass** der Zeiger (2) ein Zeiger ist, der weißes Licht verwendet.

13. Verfahren nach einem der vorhergehenden Ansprüche, **dadurch gekennzeichnet, dass** der Abstand des Punkts, auf den gezeigt wird, von dem Zeiger anhand des Atlaslot-Prinzips gemessen wird und diese Informationen verwendet werden, um die Positionsdaten des Punkts, auf den gezeigt wird, einzustellen.

14. Verfahren nach einem der vorhergehenden Ansprüche, **dadurch gekennzeichnet, dass** das Messsystem (1) ein optisches Kamerasystem ist.

15. Verfahren nach einem der vorhergehenden Ansprüche, **dadurch gekennzeichnet, dass** der Zeiger (2) auf mehrere Punkte in dem Ziel gleichzeitig zeigt.

## Revendications

1. Procédé pour spécifier un point souhaité (8) à pointer au niveau d'un espace de mesure (3), le point étant situé sur un objet, et pour mesurer la position réelle du point (9) ainsi pointé, le procédé comprenant les étapes consistant à :
étalonner un système de mesure (1) par rapport à un espace de mesure tridimensionnel (3),
étalonner un pointeur (2) par rapport à ce même espace de mesure (3),
pointer le pointeur (2) au niveau dudit point souhaité (8) dudit objet, à l'aide des coordonnées nominales dudit point souhaité (8), dans lequel lesdites coordonnées nominales sont prises à partir d'un modèle (6) dudit objet, et à l'aide d'une conversion de coordonnées des coordonnées dudit modèle dans ledit espace de mesure, et
mesurer la position réelle du point (9) ainsi pointé au moyen du système de mesure (1).

2. Procédé selon la revendication 1, **caractérisé en ce que**, pour étalonner le pointeur (2), il convient de pointer le pointeur (2) au niveau d'un point lumineux dans l'espace de mesure (3) et de mesurer la position dudit point lumineux au moyen du système de mesure (1).

3. Procédé selon la revendication 1 ou 2, **caractérisé en ce que**, lors de l'étalonnage du pointeur (2), la position du pointeur (2) est déterminée par rapport au système de mesure.

4. Procédé selon la revendication 3, **caractérisé en ce qu'**une équation permettant de convertir le système de coordonnées de l'espace de mesure (3) en un système de coordonnées polaires sphériques centré sur le pointeur est formée à l'aide des données de position du pointeur (2).

5. Procédé selon la revendication 3, **caractérisé en ce qu'**une équation permettant de convertir le système de coordonnées de l'espace de mesure (3) en un système de coordonnées rectangulaires est formée à l'aide des données de position du pointeur (2).

6. Procédé selon l'une quelconque des revendications précédentes, **caractérisé en ce que** le point (8) est compris dans un objet (5) dont un modèle (6) et la position (7) sont au moins partiellement connus dans l'espace de mesure (1).

7. Procédé selon la revendication 6, **caractérisé en ce que** la position (7) de l'objet (5) est mesurée par le système de mesure (1).

8. Procédé selon la revendication 7, **caractérisé en ce que** les coordonnées du point (8) dans l'espace de mesure (1) sont calculées sur la base de la position (7) de l'objet (5) dans l'espace de mesure (1) et de la position d'un point correspondant audit point (8) dans le modèle (6) de l'objet (5).

9. Procédé selon l'une quelconque des revendications 5 à 7, **caractérisé en ce que** le modèle (6) de l'objet (5) est un modèle de CAO.

10. Procédé selon l'une quelconque des revendications précédentes, **caractérisé en ce que** deux pointeurs (2), ou plus, sont utilisés.

11. Procédé selon l'une quelconque des revendications précédentes, **caractérisé en ce que** les calculs sont effectués au moyen d'un ordinateur pouvant transmettre des données au pointeur (2) et recevoir des données du système de mesure (1).

12. Procédé selon l'une quelconque des revendications précédentes, **caractérisé en ce que** le pointeur (2) est un pointeur qui utilise la lumière blanche.

13. Procédé selon l'une quelconque des revendications précédentes, **caractérisé en ce que** la distance du point pointé par rapport au pointeur est mesurée sur le principe du sondeur à ultrasons, et **en ce que** ces informations sont utilisées pour régler les données de position du point pointé.

14. Procédé selon l'une quelconque des revendications précédentes, **caractérisé en ce que** le système de mesure (1) est un système de caméra optique.

15. Procédé selon l'une quelconque des revendications précédentes, **caractérisé en ce que** le pointeur (2) assure un pointage simultané au niveau de plusieurs points de la cible.
